# EUROPEAN PATENT APPLICATION

(11) **EP 1 881 723 A2**
(43) Date of publication of application: **23.01.2008**
(21) Application number: 07112204.8
(22) Date of filing: 10.07.2007
(51) Int. Cl.: H04Q 7/38

(54) **Call routing**

(30) Priority: 17.07.2006 US 487790
(71) Applicant: Hewlett-Packard Development Company, L.P., Houston, TX 77070 (US)
(72) Inventor: Montz, Mark A., Omaha, NE 68114 (US); Kelly, Michael, Omaha, NE 68154 (US); Ayers, John I., Omaha, NE 68114 (US); Moore, Tiffany A., Omaha, NE 68114 (US)
(74) Representative: Franks, Adam Peter

(57) **Abstract**

Methods, computer readable media, and system embodiments are provided for call routing in communication networks. One method embodiment includes receiving a request to a Home Location Register (HLR) for a number for mobile user equipment, receiving a status of the mobile user equipment to the HLR, and using the HLR to process an availability of the mobile user equipment, based on the status.

## Description

### Background

Wireless Telecommunication systems can comprise an infrastructure, having a plurality of base stations, a gateway mobile switching center (GMSC),a home location register (HLR), and a serving mobile switching center (SMSC), among various other network components, that provide communication services to user equipment (UE), e.g., mobile phones, personal digital assistants (PDAs), Blackberry devices, located in corresponding service coverage areas of the base stations. Wireless telecommunications networks can be operated by an industry wireless provider or operator, e.g., Cingular, Vodafone, Verizon, Sprint-Nextel, and T-Mobile, among other wireless providers. Such telecommunications networks can employ various different cellular protocols including analog, time division multiple access (TDMA), code division multiple access (CDMA), and Global System for Mobile Communications (GSM), among others.

When one user equipment device, or an operator thereof, communicates (e.g., via a phone call, text message, etc.) with another user equipment device, the communication signals (e.g., phone call) are routed between the UE devices using the appropriate network components and standards and/or protocols, e.g., American National Standards Institute (ANSI) or GSM, among others. When routing calls, it can often be beneficial to determine whether the call can be successfully routed to a given user equipment device (e.g., whether the subscriber is available) prior to routing the call to the SMSC, which may reside in a different network, e.g., a different country, than the GMSC. Routing a call to a SMSC when a mobile subscriber is unavailable, e.g., when the subscriber user equipment is powered off, is inefficient resource-wise, as well as costly.

Reducing and/or preventing calls from being routed to SMSCs at inappropriate times can involve making changes to normal system processing standards performed by various network infrastructure components including GMSCs, HLRs, and SMSCs. Instituting such changes in order to improve call routing efficiency may involve making significant modifications (e.g., software and/or hardware) to one or more of these components, which can lead to increased costs to network operators.

As an example, GSM standards, e.g., under the 3^{rd} Generation Partnership Project (3GPP), developed an "Optimized Routing" feature, the implementation of which involves making modifications to the GMSC, HLR, and SMSC. Under this optimized routing feature, the GSM standards have defined a Provide Subscriber Information (PSI) message that can be sent by the HLR and received by the SMSC, e.g., the system currently providing service to the subscriber. The SMSC can then reply with the current status of the subscriber, e.g., currently unavailable, on another call, available, etc., prior to the call being routed to the SMSC. However, current HLRs do not act on this information and instead merely forward this status information back to the GMSC where the information is processed. Forwarding the information back to the GMSC for processing can involve additional routing and/or processing overhead.

### Brief Description of the Drawings

Figure 1 is a block diagram illustrating a communication network with which embodiments of the present disclosure can be implemented.
Figure 2 is a block diagram of a portion of a communication network illustrating a message exchange for call routing according to an embodiment of the present disclosure.
Figure 3 is a call flow diagram illustrating a call routing using a GSM 3GPP routing feature.
Figure 4 is a call flow diagram illustrating a call routing according to an embodiment of the present disclosure.
Figure 5 is a block diagram illustrating an embodiment of a method of call routing according to embodiments of the present disclosure.

### Detailed Description

Embodiments of the present disclosure include methods, computer readable media, and systems for routing calls and/or messages in communication networks. One method embodiment includes receiving a request to a Home Location Register (HLR) for a number for mobile user equipment (UE), receiving a status of the mobile user equipment to the HLR, and using the HLR to process an availability of the mobile user UE, based on the status.

Embodiments of the present disclosure and features thereof can be performed by software, firmware, hardware, application modules, and the like. These embodiments can use instructions resident on and/or executable by circuits such as Application Specific Integrated Circuits (ASICs), devices, systems, or networks shown herein or otherwise.

The embodiments of the present disclosure are not limited to any particular operating environment or to instructions written in any particular programming language. Software, firmware, and/or processing modules, suitable for carrying out embodiments of the present disclosure, can be resident on one or more devices in one or more locations.

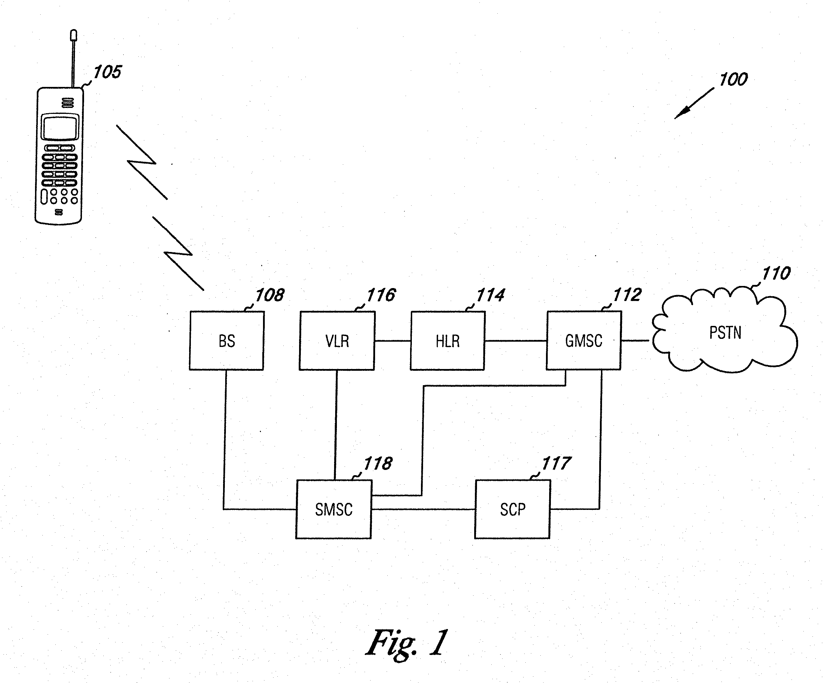

Figure 1 is a block diagram illustrating a communication network 100 with which embodiments of the present disclosure can be implemented. Figure 1 illustrates one example of some of the physical components, also referred to as Physical Entities (PEs), in a telecommunications network 100. In this example, a wireless telecommunications network is illustrated. Embodiments, however, are not limited to this example. Wireless telecommunications networks such as shown in Figure 1 can be operated by an industry wireless provider or operator, e.g., Cingular, Vodafone, Verizon, Sprint-Nextel, and T-Mobile, among other wireless providers. Such wireless networks can provide cellular/PCS (personal communication service) services like call origination and call delivery, streaming data, text messaging, etc., to and from a mobile device or handset 105, e.g., user equipment (UE).

Wireless networks 100 include one or more mobile switching centers (MSCs). For example, Figure 1 illustrates a gateway MSC (GMSC) 112 and a serving MSC (SMSC) 118 (described in more detail below) which are connected to a base station (BS) 108. Base stations 108 are dispersed throughout the geographic area serviced by the network 100. Each MSC, e.g., 112 and 118, is responsible for establishing and maintaining calls between mobile devices, e.g., UE, and/or between a mobile device and a wireline device which is connected to the wireless network 100 from a local and/or long-distance, wireline/circuit-switched based network, e.g., the PSTN 110. Embodiments of the present invention can be utilized in wireless, wireline, or combination of wireline-wireless networks.

A MSC 112/118 is a telephone switch used for wireless and mobility support. A MSC 112/118 performs various functions, including mobility management, call handoffs, call admission, call control, resource allocation, and so forth. A call and/or other data can be relayed from the MSC 112/118 to base stations 108 and vice-versa. This relay can be via a wireless communication interface to the mobile device 105 according to various interface protocol standards, e.g., according to an american national standards institute (ANSI), a global systems for mobile (GSM), or other standards interface, etc.

In the embodiment of Figure 1, MSCs 112 and 118 are designated as a gateway MSC 112 (GMSC) and a serving MSC (SMSC) 118. This designation is provided to illustrate that a MSC can provide various functions. For example, a GMSC is used to receive an initial communication from a mobile device (e.g., a mobile device terminating call) or from outside the given network (e.g., the PSTN 110 to the wireless network 100). In various embodiments, the GMSC can include a short message service GMSC (SMS-GMSC) which can be used to receive an initial communication from a mobile device (e.g., a mobile device terminating short message) or from outside the given network (e.g., the PSTN 110 to the wireless network 100).

A SMSC is used to provide the actual routing to the user equipment device 105, to which the communication is directed, i.e. the called number. The network 100 illustrated in Figure 1, includes a visitor location register (VLR) 116 which is a database that can include information about various user equipment, e.g., mobile phone 105, currently located within a service area. The VLR 116 can be integrated with the SMSC in various embodiments. As the reader will appreciate, a GMSC and a SMSC can be located in foreign networks, e.g., networks of different service providers or service provider networks located in different countries, etc.

In various embodiments, an MSC, e.g., 112 and 118, can also serve as a service switching point (SSP). A SSP directs requests for communication and/or application services, e.g., "service requests," through the network 100. For example, a service request can be sent from a mobile device 105, or a service application located elsewhere on the network, e.g., a Parlay application. The SSP's function embodied within the GMSC 112 and SMSC 118 will execute program instructions to receive, process and appropriately route the service request, e.g., to another wireless/wireline and/or service application. When a service request is received, the SSP opens a dialogue with a service control point (SCP) 117 embodied within another media platform, e.g., a service control gateway (SCG) or service capability server (SCS), and exchanges protocol messages, e.g., embedded within SS7 protocol messages, with the SCP 117.

For example, the SCP 117 can receive a service request from a mobile device 105 or wireline device, e.g., through the PSTN 110, via the SMSC 118 or GMSC 112. The SCP 117 can then instantiate a program, e.g., a service logic program (SLP), to handle a subsequent message exchange with the SCP 117.

The network 100 illustrated in Figure 1 includes a Home Location Register (HLR) 114 which is a database that can maintain mobile subscriber information for a wireless provider's subscriber base. HLR subscriber information can include the International Mobile Subscriber Identity (IMSI), service subscription information, location information, e.g., the identity of the currently serving VLR/MSC. This can enable the routing of mobile-terminated calls, service restrictions and supplementary services information, among other actions. The HLR 114 can include a second generation HLR as part of a home subscriber server (HSS) that additionally performs other functions such as performing Authentication, Authorization, and Accounting (AAA) functions.

The HLR 114 and the other physical components of the network 100 can include access to processor and memory resources, as the same are known and understood in the art. Such memory resources can include instructions, e.g., program instructions, executable by the processor to handle a message exchange and call routing.

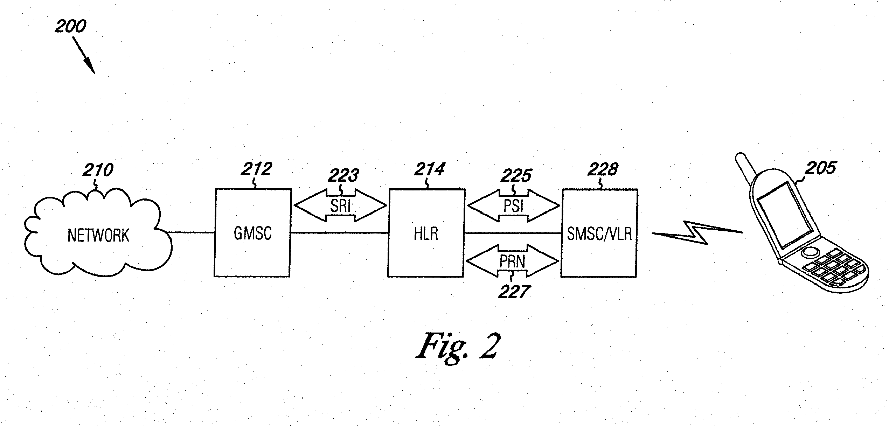

In various embodiments of the present disclosure, and as described in greater detail below in connection with Figures 2-4, the HLR 114 can be actively involved in routing calls and/or messages in order to increase routing efficiency and/or the cost effectiveness of system processing. For example, according to various embodiments, the HLR 114 can include instructions which can be executed to perform various functions including determining a status of a subscriber (e.g., UE such as a mobile phone). From time to time a subscriber can have a various statuses, e.g., available (able to receive a call), busy, or unavailable, e.g., the subscriber mobile is powered off or out of range of a base station, etc. According to various embodiments the HLR 114 can also include instructions executable to determine whether the subscriber equipment is currently in a foreign network (e.g., whether the user equipment is currently served by a SMSC in different network than the GMSC).

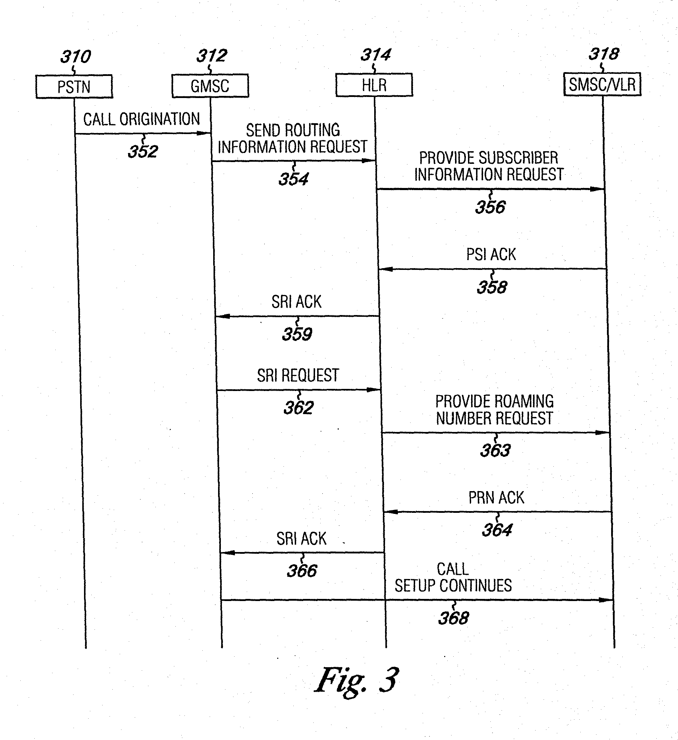

As mentioned earlier the GSM 3GPP includes standards which have defined a message called Provide Subscriber Information (PSI) as part of a so termed "Optimized Routing" feature. Such a message may be used in a Customized Applications for Mobile Enhanced Logic (CAMEL) standard for GSM networks and can be implemented in networks such as network 100 illustrated in Figure 1. In such cases, the SMSC 118 will reply with the current state of the subscriber, including if they are unavailable or currently on a phone call. Implementing such features may reduce and/or prevent calls from being routed to SMSCs at inappropriate times, e.g., when a user equipment is unavailable or busy. However, the current GSM 3GPP standards have the processing for this message started by the GMSC 112 sending a send routing information (SRI) message to the HLR 114, which in turn sends the PSI to the SMSC 118. The results of the PSI sent to the SMSC 118 are copied back into the SRI reply, and sent back to the GMSC 112 for processing. As described in detail in connection with Figure 3, currently the HLR 114 does not affect the routing of the call, per se, during this processing and rather serves as a message router for this feature under the present GSM 3GPP standards. For instance, if the call state indicates the subscriber is available, the GMSC 112 will then send a second SRI message with different parameters, which differentiate the second SRI message from the first SRI message, to the HLR 114. The HLR 114, after receiving the second SRI request, sends a Provide Roaming Number (PRN) message to the SMSC 118. The SMSC 118 will then reply to the PRN with a number used to route the call from the GMSC 112 to the SMSC 118. The HLR 114 will reply with this number in the reply to the second SRI, and allow the GMSC 112 to complete the call.

Thus, implementing a GSM 3GPP defined PSI feature involves modifying various network components including GMSCs, HLRs, and SMCs, among other network components. Modifying even fewer network components while further increasing the cost effectiveness and efficiency created by avoiding routing calls to unavailable subscribers would be beneficial to network providers/operators and mobile subscribers. For example, an operator network, e.g., network 100 may include several GMSCs 112 that are supported by a single HLR 114. According to various embodiments described herein, process logic, e.g., executable instructions are provided to the HLR 114 such that the HLR 114 can process the results of the reply PSI message directly on the HLR 114. Such an implementation may be further cost effective and/or more efficient to call routing since implementing this capability can be achieved by involving updates to HLR 114 without having to update the several GMSCs 112 supported thereby.

Figure 2 is a block diagram of a portion of a communication network 200 illustrating a message exchange for call routing according to an embodiment of the present disclosure. In the embodiment of Figure 2, the network 200 includes a portion of a GSM network, e.g., a portion of network 100 illustrated in Figure 1. This portion of the GSM network includes a network 210 which can be a PSTN or other network that can communicate with a GMSC 212. For example, calls and or messages sent from devices in network 210 are initially routed to the GMSC 212.

The network 200 includes a HLR 214 and a SMSC/VLR 228 that can perform processing to determine the status of a user equipment 205 and/or to route a call to user equipment 205. In this embodiment, the SMSC/VLR 228 includes a VLR integrated with the SMSC, however, embodiments are not so limited, e.g., the SMSC and VLR can be separate as shown in Figure 1. It is also noted that in various embodiments, the SMSC/VLR 228 can be located in a foreign network, e.g., the SMSC/VLR 228 can be located in a different country and/or different wireless provider's network than the GMSC 212 and/or HLR 214.

In the embodiment illustrated in Figure 2, the GSM network 200 includes an HLR 214 that is configured to perform particular processing based on a message received from the GMSC, e.g., a Send Routing Information (SRI) request 223. The SRI request 223 is a message to the HLR 214 requesting information, e.g., a temporary number such as a Mobile Station Roaming Number (MSRN), for routing the call/SMS toward the subscriber 205. According to the GSM 3GPP standards the HLR 214 is configured to transmit a message such as PSI request 225, to the SMSC/VLR 228 depending on the status of the subscriber 205 and/or the SMSC/VLR 228. For instance, in various embodiments, instructions execute in the HLR 214 to determine whether the subscriber 205 does not have a current SMSC/VLR 228 due to being switched off for an extended period, among other reasons. As another example, instructions execute in the HLR 214 to determine whether the subscriber 205 is currently being served by a SMSC/VLR that does not support PSI messages, e.g., the SMSC/VLR is not configured to support a GSM 3GPP PSI message feature. When the subscriber 205 is currently served by a SMSC/VLR 228 that supports PSI messages, instructions are executed to cause the HLR 214 to send the PSI request 225 to that SMSC/VLR 228. The SMSC/VLR 228 then responds with a PSI acknowledge message 225 which includes the current state of the subscriber 205, e.g., whether the subscriber 205 is available for a call, unavailable, busy, etc.

In various embodiments, the HLR 214 executes instructions to process and determine whether the subscriber 205 is available based on the PSI response 225 from the SMSC/VLR 228. If the subscriber 205 is available the HLR 214 executes instructions to process the PSI information rather than forwarding this information to the GMSC 212 for processing. In such embodiments, the HLR 214 executes instructions to then transmit a message (MSG) 227, e.g., a Provide Roaming Number (PRN) request message, to the SMSC/VLR 228. That is, the HLR 214 executes instructions to initiate the PRN message from the HLR 214 to the SMSC/VLR 228. According to various embodiments the HLR 214 can then receive a PRN response from the SMSC/VLR 228 and can provide the temporary number (MSRN) contained therein to the GMSC 212 in a SRI response 223 as per GSM standards, e.g., GSM Mobile Application Part (MAP) standards.

In cases in which the HLR 214 determines that the subscriber 205 is currently busy or unavailable based on the PSI response 225 from the SMSC/VLR 228, the HLR 214 can execute instructions to provide a Call Forwarding Number (CFN), if one is available, to the GMSC 212 in the SRI response 223 from the HLR 214. The GMSC 212 can then route the call to the number provided by the HLR 214 in the SRI response 223 while remaining unaware of the PSI processing that has been performed by the HLR 214. As discussed herein, the additional processing, e.g., determining the availability of the subscriber 205, initiating a PRN request, etc., performed by the HLR 214, is different than that currently provided according to GSM 3GPP standard protocol.

In various embodiments, the HLR 214 is configured, e.g., includes executable instructions, to determine if the subscriber 205 and/or the SMSC/VLR 228 is in a foreign network. In such embodiments, the HLR 214 can execute instructions, e.g., program instructions, to perform the additional processing when the subscriber 205 and/or the SMSC/VLR 228 is in a different network than the HLR 214. In some embodiments, the HLR 214 determines whether the SMSC/VLR 228 is in a foreign network and then executes instructions to perform the additional processing, e.g., transmitting the PSI 225, transmitting a PRN, etc., only if the SMSC/VLR 228 is in a foreign network.

Since the GMSC 212 remains unaware of the PSI processing performed by the HLR 214, modification of one or more GMSCs 212 associated with the HLR 214 can be avoided. Implementing hardware, software, and/or firmware changes to the HLR 214 to allow it to perform the additional PSI processing, may be less cost and resource intensive than the initial effort with implementing the GSM 3GPP standard defining the PSI message feature since implementation of the present embodiments can be performed without having to implement changes to both the HLR 214 and GMSC 212. Again, in some instances, a single HLR may serve multiple GMSCs. In such instances, it can be more efficient and/or cost effective to modify the single HLR rather than the HLR and the several GMSCs.

Figure 3 is a call flow diagram illustrating a call routing using a GSM 3GPP routing feature. The call flow diagram of Figure 3 illustrates a GSM terminated call (i.e., a call terminating on a GSM network) in a GSM network in which a PSI message feature is defined, e.g., as may be a part of a Customized Applications for Mobile Enhanced Logic (CAMEL) capable network. In such networks modifications to the GMSC 312, the HLR 314, and the SMSC/VLR 318 have been made to accommodate the defined PSI message feature.

In the call flow illustrated in Figure 3, a call is originated 352 from the PSTN 310 to a GMSC 312. Call origination 352 can include a first mobile device user dialing the Mobile Station International ISDN (MSISDN) number for a second mobile device subscriber, causing the PSTN 310 to route the call to the GMSC. The GMSC 312 transmits a particular Send Routing Information (SRI) request 354 to the HLR 314 to obtain the current subscriber status information. The particular SRI request 354 includes a parameter, e.g., suppress-T-CSI (terminating-CAMEL service information), to inform the HLR 314 that the call is a so termed "Optimal Routed" or CAMEL call. The HLR 314 then transmits a provide Subscriber Information Request (PSI) 356 to the SMSC/VLR 318. The PSI message is used to query the availability of a subscriber prior to routing a call to the subscriber, which can be inefficient and/or cost ineffective if the call is routed to a subscriber that is unavailable or busy, for example. The T-CSI is a data structure provided to a GMSC 312 or SMSC telling it where to get information over the network to complete call processing. Here, in this example of current GSM 3GPP standards implementations, the particular suppress T-CSI parameter or flag plays a role in getting the SRI processing done correctly. For example, the suppress T-CSI parameter instructs the HLR 314 not to send the T-CSI to the GMSC 312 at this time.

The SMSC/VLR 318 responds with the status of the subscriber in a PSI acknowledge (ACK) 358 to the HLR 314. The information contained in the PSI ACK 358, e.g., whether the subscriber is available or not, is forwarded for processing by the GMSC 312 from the HLR 314 in a SRI ACK 359. That is, the HLR 314 does not modify its processing based on the contents of the PSI ACK 358. The GMSC 312 then processes the result of the SRI ACK 359 to determine if the subscriber is in a busy or unavailable state. If the subscriber is in an available state, then the call set up can continue with the GMSC 312 sending a second SRI request 362 (without the suppress-T-CSI parameter) such that the HLR 314 transmits a PRN (as opposed to a PSI) request 363 to the SMSC/VLR 318. The SMSC/VLR 318 transmits a temporary number (MSRN) to the HLR 314 in a PRN ACK 364. The HLR 314 then sends the temporary number contained in the PRN ACK 364 to the GMSC 312 in the SRI ACK 366. Once again, in this example, the HLR does not modify its processing as it forwards the MSRN to the GMSC 312. The GMSC 312 then uses the MSRN to route the call to the SMSC/VLR 318 as call setup continues 368 according to GSM standards processing.

As illustrated in the call flow diagram of Figure 3, the HLR 314 acts as an intermediary between the GMSC 312 and SMSC/VLR 318, forwarding information between them. That is, the HLR 314 is not actively involved in the routing of the call, e.g., the HLR 314 does not determine the availability of a subscriber but rather forwards 359 the PSI ACK 358 to the GMSC 312 for processing. Hence, in this current approach each GMSC 312 must be configured to support and/or process the PSI message 359, which can require modifications to the GMSC 312 in order to perform the GSM 3GPP defined PSI feature processing.

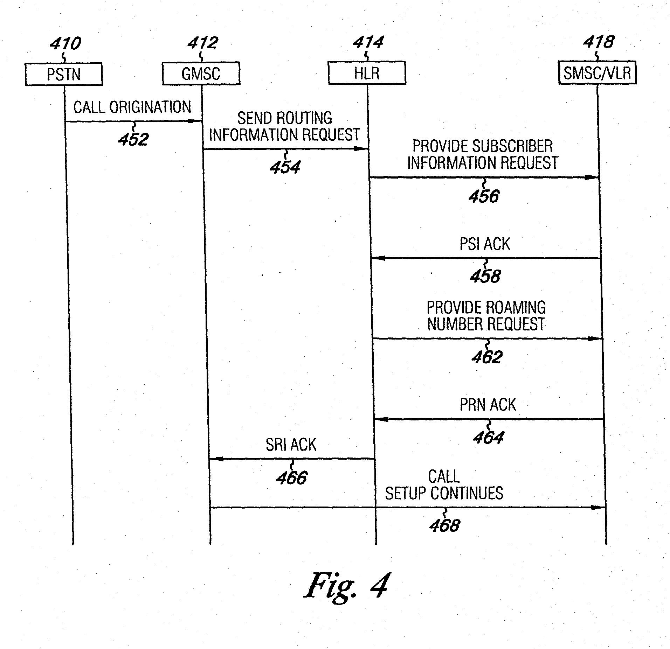

Figure 4 is a call flow diagram illustrating a call routing according to an embodiment of the present disclosure. The call flow diagram of Figure 4 illustrates a call flow for a GSM terminated call. In the call flow diagram of Figure 4, the call originates 452 from the PSTN 410 to the GMSC 412. A GSM standards SRI request 454, e.g., a request for a temporary subscriber number such as a MSRN, is sent from the GMSC 412 to the HLR 414 without the particular parameter described in Figure 3, e.g., without the suppress-T-CSI parameter. As discussed above in connection with Figure 2, the HLR 414 can be configured, e.g., include executable instructions, to determine whether the subscriber to which the call is to be routed has a current SMSC 418 and/or whether the SMSC 418 is configured to support a PSI message. In cases in which the subscriber currently has a SMSC 418 that supports a PSI message, the HLR 414 includes instructions that can be executed to transmit a PSI request 456 for the subscriber to the SMSC 418. The SMSC 418 then responds with the current state of the subscriber via a PSI ACK 458 to the HLR 414.

In various embodiments, and as shown in the call flow of Figure 4, the PSI ACK 458 is not sent back to the GMSC 412 (i.e., the GMSC 412 now does not require modifications from GSM standards to process PSI messages). Rather, the HLR 414 determines the availability of the subscriber, e.g., a user equipment such as a mobile cell phone, without forwarding the PSI 458 to the GMSC 412. That is, the HLR 414 itself executes instructions to determine if the subscriber is available for a call, unavailable, busy, etc. In the call flow embodiment of Figure 4, it is assumed that the subscriber is available to take a call. However, as discussed above in connection with Figure 2 and as further discussed below, embodiments are not limited to a subscriber status and/or availability.

Since the HLR 414 determines that the subscriber is available in this embodiment (based on the PSI ACK 458), the HLR 414 communicates a PRN request 462 to the SMSC/VLR 418. That is, instructions can be executed such that the HLR 414 itself issues the PRN request 462. The SMSC/VLR 418 can process the PRN request 462 according to GSM standards and can provide a temporary number for the subscriber, e.g., a MSRN, in the PRN ACK 464. The call flow continues with the HLR 414 being configured to provide the temporary number for the subscriber in the SRI ACK 466 sent to the GMSC 412. The call setup can then continue as per GSM standards with the GMSC 412 using the MSRN to route the call to the subscriber via the SMSC 418 as shown at 468.

If the HLR 414 determines that the subscriber is unavailable or busy after receiving the PSI ACK 458, then instructions can be executed to determine, by using the HLR 414, appropriate numbers for those cases. For instance, the HLR 414 can check to determine a call forwarding number (CFN) is available for the specific case, e.g., to forward the call to a third party such as a voicemail or attendant. If a CFN is available, then the number corresponding to the CFN can be included in the SRI ACK 466 from the HLR 414 to the GMSC 412 and GSM standards processing can continue as the GMSC 412 can route the call to the appropriate number.

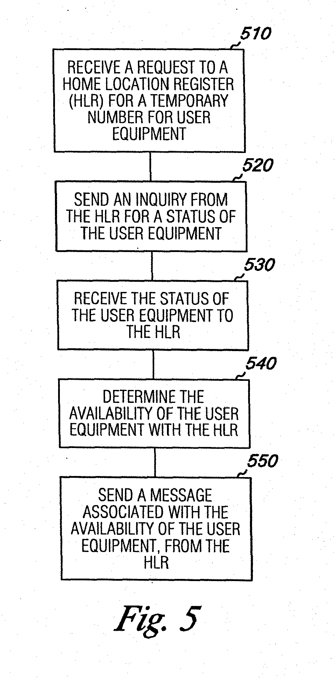

Figure 5 is a block diagram illustrating an embodiment of a method of call routing according to embodiments of the present disclosure. As illustrated at block 510 the method can include receiving a request to a HLR for a number for a mobile user equipment. As discussed above, the request can be a message from a GMSC in a GSM telecommunications network and can be in the form of a SRI request without the particular parameter described in Figure 3, e.g., without the suppress-T-CSI parameter. The GMSC can be a GMSC which does not include a GSM 3GPP defined PSI feature processing capability, e.g., as discussed in connection with Figure 4.

As shown at block 520, the method can include sending an inquiry from the HLR for a status of the user equipment. The inquiry can be associated with the status of the user equipment as related to a current SMSC, i.e., whether the user equipment currently has a SMSC and/or whether the currently serving SMSC supports certain GSM standard features such as a PSI message. The inquiry can also be associated with whether a user equipment, which is currently served by a SMSC that does support PSI messages, is available to take a call, unavailable to take a call, or busy.

As shown at block 530, the method can include receiving the status of the user equipment to the HLR. The status can be received in the form of a message from a SMSC, e.g., a PSI acknowledge response as shown in Figure 4. The method can include determining the availability of the user equipment with the HLR, as shown at block 540 and described in connection with Figure 4. At block 550, the method can include sending a message associated with the availability of the user equipment, from the HLR. The message can be sent to a SMSC or a GMSC and can be in the form of a PRN or CFN depending on the availability status of the user equipment as discussed in connection with Figure 4. For example, if a PSI ACK received by the HLR indicates that the user equipment is available, then the HLR can send a PRN request to the SMSC. If the PSI ACK received by the HLR indicates that the user equipment is unavailable, then the HLR can send a CFN message to the GMSC.

As described herein, various embodiments of the present disclosure can reduce the amount of components impacted in a GSM network implementing a GSM 3GPP standard defining the PSI message feature since implementation of the present embodiments can be performed without having to implement changes to both the HLR 214 and GMSC 212. For example, according to various embodiments, an HLR can determine whether a mobile subscriber is currently served by a SMSC that supports PSI messages. The HLR can then initiate a PRN request in response to a PSI acknowledge without the information in the PSI acknowledge being sent back to the GMSC for processing. Avoiding the transmission of the PSI response to the GMSC can reduce/eliminate the need to modify the GMSC to process the PSI response. Additionally, the various embodiments may improve the network cost effectiveness and efficiency by reducing and/or preventing calls from being routed to subscribers having unavailable or busy status. As noted, routing calls to subscribers having an unavailable or a busy status may be particularly costly when the GMSC and subscriber and/or SMSC are located in separate networks. Various embodiments of the present disclosure include an HLR which is configured to determine whether the SMSC is in a foreign network, and to perform additional PSI processing, e.g., PSI processing on the HLR to determine the status of the subscriber, initiating a PRN request, etc., only when the SMSC is in a foreign network.

Although specific embodiments have been illustrated and described herein, those of ordinary skill in the art will appreciate that an arrangement calculated to achieve the same techniques can be substituted for the specific embodiments shown. This disclosure is intended to cover all adaptations or variations of various embodiments of the present disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the present disclosure includes other applications in which the above structures and methods are used. Therefore, the scope of various embodiments of the present disclosure should be determined with reference to the appended claims, along with the full range of equivalents to which such claims are entitled.

In the foregoing Detailed Description, various features are grouped together in a single embodiment for the purpose of streamlining the disclosure. This method of disclosure is not to be interpreted as reflecting an intention that the embodiments of the present disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A method comprising:
receiving a request to a home location register (HLR) for a number for a mobile user equipment (UE);
receiving a status of the mobile UE to the HLR; and
using the HLR to process an availability of the mobile UE, based on the status.

2. The method of claim 1, wherein processing an availability of the mobile UE includes directly transmitting a provide roaming number (PRN) request from the HLR to a mobile switching center (MSC) when the processing determines the mobile UE is available.

3. The method of claim 1 or 2, wherein the method includes receiving the status of the mobile UE to the HLR in response to an inquiry transmitted from the HLR for the status of the mobile UE.

4. The method of claim 1, 2 or 3, wherein receiving the request to the HLR for the number includes receiving the request from a mobile switching center (MSC), and wherein the status of the mobile UE is received to the HLR without being received to the MSC.

5. The method of claim 1, 2, 3 or 4, wherein the method includes transmitting the number from the HLR to the MSC, based on the status of the mobile user equipment.

6. A telecommunications network including:
a GMSC, in communication with an HLR;
a SMSC, in communication with the HLR and a mobile device; and wherein the HLR is configured to:
determine whether the mobile device is available based on a message received from the SMSC; and
initiate a PRN request to the SMSC if the HLR determines that the mobile device is available.

7. The network of claim 6, wherein the message received from the SMSC is a provide subscriber information (PSI) message and wherein the PSI message is not received by the GMSC.

8. The network of claim 6 or 7, wherein the HLR is further configured to determine a call forwarding number (CFN) for the mobile device from an HLR database and to transmit the CFN to the GMSC if the HLR determines that the mobile device is unavailable.

9. The network of claim 6, 7 or 8, wherein the HLR telecommunications network is a Global System for Mobile Communications (GSM) network.

10. The network of claim 9, wherein the HLR is configured to determine whether the SMSC in communication with the mobile device supports PSI messages.
